# FASCICULE DE BREVET EUROPEEN

(11) **EP 3 462 001 B1**
(45) Date de publication et mention de la délivrance du brevet: **22.04.2020**
(21) Numéro de dépôt: 18194257.4
(22) Date de dépôt: 13.09.2018
(51) Int. Cl.: F01N 3/20, F01N 9/00

(54) **PROCEDE DE SUPERVISION D'UNE SONDE DE MESURE COMBINEE POUR UN SYSTEME DE DEPOLLUTION DES GAZ D'ECHAPPEMENT**
ÜBERWACHUNGSVERFAHREN EINER KOMBINIERTEN MESSSONDE FÜR EIN ABGASREINIGUNGSSYSTEM
METHOD FOR MONITORING A COMBINED MEASURING PROBE FOR AN EXHAUST GAS POLLUTION REMOVAL SYSTEM

(30) Priorité: 02.10.2017 FR 1759178
(43) Date de publication de la demande: 03.04.2019
(73) Titulaire: PSA Automobiles SA, 78300 Poissy (FR)
(72) Inventeur: DENYS, Fabien, 92500 RUEIL MALMAISON (FR); SUY, Dara, 92400 COURBEVOIE (FR)

(56) Documents cités:
- EP-A1- 3 073 082
- DE-A1-102007 040 439
- DE-A1-102016 005 262

## Description

La présente invention porte sur un procédé de supervision d'une sonde de mesure combinée pour un système de dépollution des gaz d'échappement.

Le document DE 10 2007 040439 A1 décrit un procédé de supervision d'une sonde de mesure combinée pour un système de dépollution de gaz d'échappement émis par un moteur thermique équipant un véhicule automobile comportant un système de réduction d'oxydes d'azote contenus dans les gaz d'échappement par réaction entre de l'ammoniac et lesdits oxydes d'azote. Ce procédé comporte une étape de basculement sélectif entre une première information issue de la sonde relative à une mesure d'oxydes d'azote, telle que le taux d'oxydes d'azote, contenus dans les gaz d'échappement et une seconde information issue de la sonde relative à une mesure d'ammoniac, telle que le taux d'ammoniac, contenu dans les gaz d'échappement, en fonction de conditions de fonctionnement du moteur thermique et/ou du véhicule automobile.

De façon connue en soi, les moteurs thermiques sont dépollués à l'aide de plusieurs éléments fonctionnels de dépollution. Ainsi, pour un moteur de type Diesel par exemple, il est possible d'installer sur la ligne d'échappement un catalyseur d'oxydation (ou "DOC" pour "Diesel Oxidation Catalyst") permettant l'oxydation d'hydrocarbures (HC) et de monoxyde de carbone (CO) en dioxyde de carbone et en eau, ou un adsorbeur passif d'oxydes d'azote (ou "PNA" pour "Passive NOx Adsorber" en anglais) qui permet de réaliser les mêmes réactions qu'un catalyseur d'oxydation et dispose en outre d'une faculté à stocker les oxydes d'azote à basse température (lorsqu'un catalyseur SCR n'est pas actif) et à les déstocker à plus haute température (lorsque le catalyseur SCR est actif).

Le catalyseur de système de réduction catalytique sélective (ou "SCR" pour "Selective Catalytic Reduction" en anglais) permet de réduire les oxydes d'azote (NOx) contenus dans les gaz d'échappement, tandis qu'un filtre à particules permet de piéger des particules contenues dans les gaz d'échappement, notamment sous forme de suies. Il est également possible de mettre en œuvre un catalyseur de réduction (ou "ASC" pour "Ammonia Slip Catalyst" en anglais) pour supprimer l'ammoniac (NH3) en excès dans les gaz d'échappement.

Le fonctionnement du système SCR est basé sur une réaction chimique entre les oxydes d'azote et un réducteur prenant classiquement la forme d'ammoniac. L'injection de l'ammoniac dans la ligne d'échappement est généralement réalisée par l'intermédiaire d'une autre espèce chimique, telle qu'un agent réducteur à base d'urée qui se décompose en ammoniac et en dioxyde de carbone sous l'effet de la chaleur.

La mesure des oxydes d'azote par une sonde, dite sonde NOx, disposée en aval du catalyseur SCR, permet de réguler le système de dépollution et également de diagnostiquer son fonctionnement. Ainsi, si la production d'oxydes d'azote mesurée en sortie du système SCR n'est pas au niveau requis, une unité de commande ajuste la quantité d'agent réducteur injectée.

Certaines sondes NOx ont la particularité de pouvoir proposer également une information relative à la présence d'ammoniac. Toutefois, les deux informations fournies par cette sonde NOx ne sont pas simultanées.

Il existe donc le besoin de pouvoir basculer de la mesure d'oxydes d'azote à la mesure d'ammoniac afin d'obtenir le meilleur compromis entre l'efficacité du système SCR et la désorption d'ammoniac vers l'atmosphère.

L'invention vise à combler ce besoin en proposant un procédé de supervision d'une sonde de mesure combinée pour un système de dépollution de gaz d'échappement émis par un moteur thermique équipant un véhicule automobile comportant:
- un système de réduction d'oxydes d'azote contenus dans les gaz d'échappement par réaction entre de l'ammoniac et lesdits oxydes d'azote, et
- un catalyseur de réduction d'un excès d'ammoniac contenu dans les gaz d'échappement, caractérisé en ce que ledit procédé comporte une étape de basculement sélectif entre une première information issue de la sonde relative à une mesure d'oxydes d'azote, telle que le taux d'oxydes d'azote, contenus dans les gaz d'échappement et une seconde information issue de la sonde relative à une mesure d'ammoniac, telle que le taux d'ammoniac, contenu dans les gaz d'échappement, en fonction de conditions de fonctionnement du moteur thermique et/ou du véhicule automobile, le basculement sélectif est effectué en fonction d'un gradient de couple permettant d'anticiper une phase de fonctionnement transitoire du moteur thermique.

L'invention permet ainsi de satisfaire aux normes d'émissions imposées par la réglementation en disposant des informations relatives aux mesures d'oxydes d'azote ou d'ammoniac au moment opportun pour pouvoir réguler les systèmes de dépollution au plus juste. L'invention permet également d'obtenir un gain en termes de consommation d'agent réducteur.

Selon une mise en œuvre, lorsque le gradient de couple est inférieur à un seuil, l'information relative à la mesure d'oxydes d'azote dans les gaz d'échappement est sélectionnée, et lorsque le gradient de couple dépasse le seuil, l'information relative à la mesure d'ammoniac dans les gaz d'échappement est sélectionnée.

Selon une mise en œuvre, le seuil de gradient de couple est défini par une cartographie calibrable en fonction d'un régime moteur et d'un gradient de couple.

Selon une mise en œuvre, lorsque le gradient de couple devient inférieur au seuil, une temporisation calibrable est appliquée sur l'information relative à la mesure d'ammoniac de manière à capter l'intégralité d'un pic d'ammoniac dû à un régime de fonctionnement transitoire.

Selon une mise en œuvre, le basculement sélectif est effectué en fonction d'une température en amont du système de réduction des oxydes d'azote.

Selon une mise en œuvre, dans le cas où la température est inférieure à un seuil minimal d'efficacité du système de réduction d'oxydes d'azote autorisant une injection d'agent réducteur, l'information relative à la mesure d'ammoniac est sélectionnée.

Selon une mise en œuvre, le basculement sélectif est effectué en fonction d'une vitesse du véhicule automobile et/ou de coordonnées de position dudit véhicule automobile.

Selon une mise en œuvre:
- dans le cas où la vitesse du véhicule automobile est supérieure à un seuil de vitesse calibrable et/ou que les coordonnées de position du véhicule automobile correspondent à un roulage du véhicule sur route ou autoroute, l'information relative à la mesure d'oxydes d'azote dans les gaz d'échappement est sélectionnée,
- dans le cas où la vitesse du véhicule automobile est inférieure au seuil de vitesse calibrable et/ou que les coordonnées de position du véhicule automobile correspondent à un roulage du véhicule en ville, l'information relative à la mesure d'ammoniac dans les gaz d'échappement est sélectionnée.

Selon une mise en œuvre, l'information relative à la mesure d'oxydes d'azote est sélectionnée par défaut.

L'invention sera mieux comprise à la lecture de la description qui suit et à l'examen des figures qui l'accompagnent. Ces figures ne sont données qu'à titre illustratif mais nullement limitatif de l'invention.

La figure 1 est une représentation schématique d'une ligne d'échappement munie d'un système de dépollution des gaz d'échappement comportant une sonde combinée de mesure d'oxydes d'azote (NOx) et d'ammoniac (NH₃);

La figure 2 est une représentation des différents modules fonctionnels mis en œuvre dans le procédé de basculement sélectif d'une mesure d'oxydes d'azote vers une mesure d'ammoniac selon la présente invention;

La figure 3 montre des représentations graphiques respectivement de l'évolution, en fonction du temps, d'une demande de couple moteur, du gradient de couple, et de l'activation de la mesure d'ammoniac.

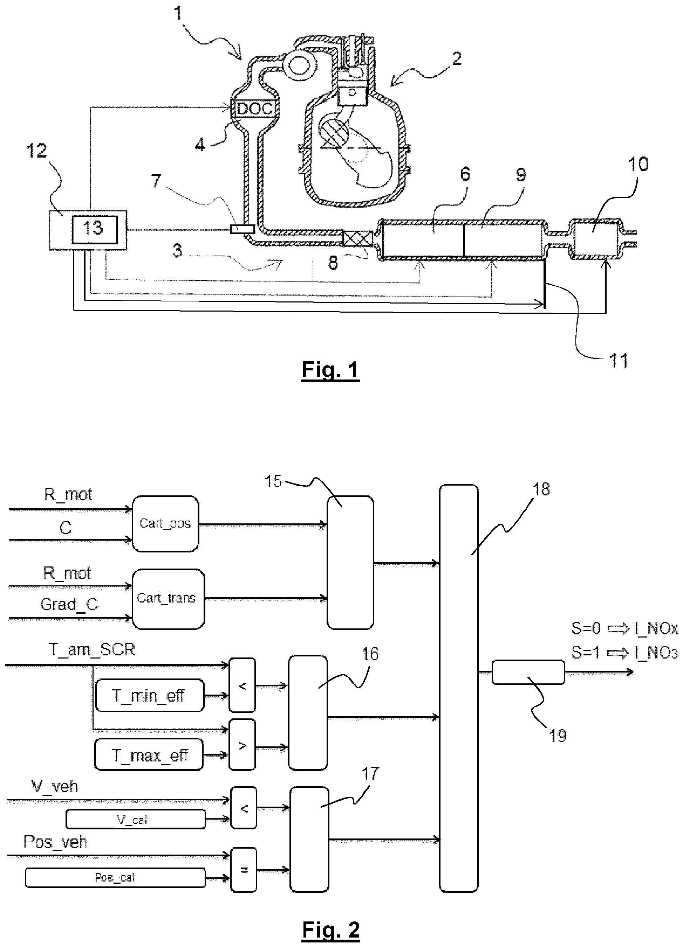

La figure 1 représente une ligne d'échappement 1 d'un moteur thermique 2, notamment de véhicule automobile, sur laquelle est monté un système de dépollution 3 des gaz d'échappement.

Ce système de dépollution 3 comporte des éléments fonctionnels, tels qu'un catalyseur d'oxydation 4 Diesel (ou "DOC" pour "Diesel Oxidation Catalyst") permettant l'oxydation d'hydrocarbures (HC) et de monoxyde de carbone (CO) en dioxyde de carbone et en eau; ainsi qu'un catalyseur 6 de système de réduction catalytique sélective (ou "SCR" pour "Selective Catalytic Reduction" en anglais) adapté à injecter, via un injecteur 7, un agent réducteur dans la ligne d'échappement 1 afin de transformer les oxydes d'azote (NOx) rejetés par le moteur 2 en azote et en eau. L'agent réducteur prend avantageusement la forme d'urée qui se décompose en ammoniac et en dioxyde de carbone sous l'effet de la chaleur. Un mélangeur 8 favorise la décomposition de l'urée et permet avantageusement de mélanger intimement les gouttelettes d'urée injectées avec les gaz d'échappement, de façon à obtenir un mélange homogène pour optimiser le traitement par le catalyseur 6.

Un filtre à particules 9 permet de piéger des particules solides ou liquides constituées essentiellement de suies à base de carbone, et/ou de gouttelettes d'huile. Ces particules ont typiquement une taille comprise entre quelques nanomètres et un micromètre. A cet effet, le filtre à particules 9 est à base d'une matrice céramique poreuse, par exemple en cordiérite, mullite, titanate d'aluminium ou carbure de silicium, comportant des canaux bouchés alternativement à leurs extrémités, de façon connue.

En outre, un catalyseur 10 de réduction de type "ASC" (pour "Ammonia Slip Catalyst" en anglais) est apte à supprimer au moins en partie des particules d'ammoniac contenues dans les gaz d'échappement. Le catalyseur ASC 10 est disposé en aval du catalyseur SCR 6.

Une sonde de mesure combinée 11, disposée en aval du catalyseur SCR 6 et en amont du catalyseur ASC 10, permet de fournir sélectivement une information I_NOx relative à une mesure d'oxydes d'azote ou une information I_NH₃ relative à une mesure d'ammoniac. Cette information est par exemple un taux de ces substances dans les gaz d'échappement. Ce taux est par exemple exprimé en ppm (Partie Par Million) et pourra être transformé le cas échéant en un débit par le calculateur moteur. Cette sonde 11 n'est toutefois pas capable de fournir ces deux informations I_NOx, I_NH₃ en même temps.

Cette sonde 11 permet de réguler le système de dépollution 3 et de diagnostiquer son fonctionnement. Ainsi, si la production d'oxydes d'azote mesurée en sortie du système SCR n'est pas au niveau requis, il est possible d'ajuster la quantité d'agent réducteur injectée.

La mesure d'ammoniac permet également de réguler le système de dépollution 3 car dans le cas où le niveau d'ammoniac dépasse un seuil, cela signifie qu'il y a eu trop d'agent réducteur injecté dans le système SCR ou que la température est trop élevée dans la ligne d'échappement 1, ce qui fait chuter l'efficacité du système SCR. L'injection d'urée et/ou le pilotage du moteur thermique 2 pourront alors être adaptés en conséquence pour éviter cela.

Un calculateur 12 (ou ECU pour "Engine Control Unit" en anglais) associé à une mémoire 13 assure notamment la commande du moteur thermique 2, ainsi qu'une gestion des différents éléments fonctionnels 4, 6, 7, 9, 10, 11.

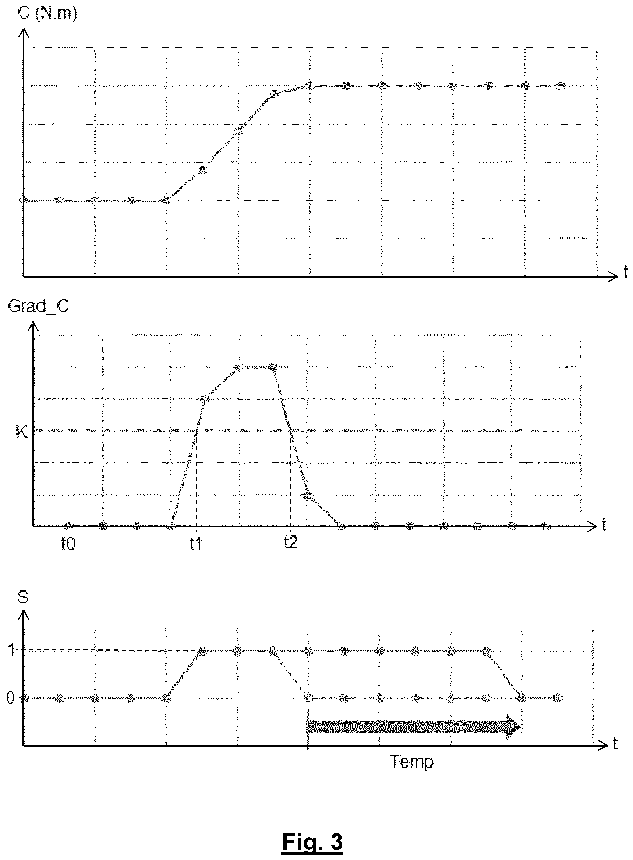

On décrit ci-après, en référence avec les figures 2 et 3, le procédé de supervision de la sonde de mesure 11 comportant une étape de basculement sélectif entre l'information I_NOx relative à la mesure du taux d'oxydes d'azote contenus dans les gaz d'échappement et l'information I_NH₃ issue de la sonde 11 relative à la mesure du taux d'ammoniac contenu dans les gaz d'échappement en fonction de conditions de fonctionnement du moteur thermique 2 et/ou du véhicule automobile.

A cette fin, on définit un signal de sortie S, par exemple de type booléen, permettant l'activation de la mesure d'ammoniac (NH₃). Dans le cas où le signal S est à 0, la sonde 11 assure la mesure des oxydes d'azote (NOx). Dans le cas où le signal S passe à 1, la sonde 11 assure la mesure de l'ammoniac. De préférence, par défaut, le signal S est à 0 de sorte que la mesure d'oxydes d'azote est activée.

Une première condition d'activation de la mesure du taux d'ammoniac lors d'un mode de fonctionnement nominal du moteur 2 est basée sur l'analyse d'un gradient de couple. En effet, les rejets d'ammoniac dans l'atmosphère se produisent lors de forts gradients de thermique correspondant, sur un moteur de type diesel, à de forts gradients de couple.

Le basculement sélectif de la mesure d'oxydes d'azote vers la mesure d'ammoniac est ainsi effectué en fonction du gradient de couple qui permet d'anticiper une phase de fonctionnement transitoire du moteur thermique 2.

La figure 3 montre ainsi des représentations graphiques respectivement de l'évolution, en fonction du temps t, d'une demande de couple moteur C, du gradient de couple Grad_C, et de l'activation de la mesure d'ammoniac.

On observe que lorsque le gradient de couple Grad_C est inférieur à un seuil K entre les instants t0 et t1, l'information I_NOx relative à la mesure du taux d'oxydes d'azote dans les gaz d'échappement est sélectionnée. Autrement dit, le signal S vaut 0 entre les instants t0 et t1.

Lorsque le gradient de couple Grad_C dépasse le seuil K à partir de l'instant t1, l'information I_NO₃ relative à la mesure du taux d'ammoniac dans les gaz d'échappement est sélectionnée. Autrement dit, le signal S vaut 1 entre les instants t1 et t2.

Lorsque le gradient de couple Grad_C repasse en dessous du seuil K, une temporisation calibrable Temp est appliquée sur l'information I_NH₃ relative à la mesure du taux d'ammoniac de manière à capter l'intégralité d'un pic d'ammoniac dû à un régime de fonctionnement transitoire. Cette temporisation Temp n'est pas appliquée en cas d'activation, c'est-à-dire lorsque le gradient de couple Grad_C passe au-dessus du seuil K.

Le seuil K est avantageusement défini dans une cartographie calibrable Cart_trans en fonction d'un régime moteur R_mot et d'un gradient de couple Grad_C.

Le cas échéant, une position du point actuel de fonctionnement définie par le couple C et le régime moteur R_mot via une cartographie du moteur Cart_pos permet d'apporter un degré de liberté dans la loi de commande. Une porte logique de type ET référencée 15 permet de combiner les signaux de sortie des modules Cart_trans et Cart_pos pour élaborer le signal S d'activation de la mesure du taux d'ammoniac.

Une deuxième condition d'activation de la mesure du taux d'ammoniac lors d'un mode de fonctionnement nominal du moteur 2 est basée sur l'analyse d'une température T_am_SCR en amont du système de réduction des oxydes d'azote.

En effet, lorsque le système SCR est en chauffe, c'est-à-dire que la température T_am_SCR est inférieure à un seuil minimal d'efficacité T_min_eff du système SCR, il n'est pas possible d'injecter de l'agent réducteur dans la ligne d'échappement 1. Le signal S passe alors à 1 pour que la sonde 11 renvoie l'information I_NO₃ relative à la mesure du taux d'ammoniac.

Par ailleurs, dans le cas où la température T_am_SCR devient supérieure à un seuil maximal d'efficacité T_max_eff du système SCR, le signal S passe également à 1 pour que la sonde 11 renvoie l'information I_NO₃ relative à la mesure du taux d'ammoniac.

Les conditions sur les températures sont combinées entre elles via une porte logique de type OU référencée 16 sur la figure 2.

Une troisième condition d'activation de la mesure du taux d'ammoniac lors d'un mode de fonctionnement nominal du moteur 2 est basée sur l'analyse d'une vitesse du véhicule automobile V_veh et/ou de coordonnées de position Pos_veh dudit véhicule automobile.

Dans le cas où la vitesse V_veh est inférieure à un seuil de vitesse calibrable V_cal et/ou que les coordonnées de position Pos_veh du véhicule automobile correspondent à un roulage du véhicule en ville, soit à une position calibrable Pos_cal, l'information I_NO₃ relative à la mesure du taux d'ammoniac dans les gaz d'échappement est sélectionnée. En effet, lors de roulage en ville, l'excès d'ammoniac se dilue moins bien et pourrait être senti par des passants, de sorte qu'il est préférable de basculer sur une mesure d'ammoniac pour limiter au maximum les rejets d'ammoniac vers l'atmosphère.

Dans le cas où la vitesse V_veh est supérieure au seuil de vitesse calibrable V_cal et/ou que les coordonnées de position Pos_veh du véhicule automobile correspondent à un roulage du véhicule sur route ou autoroute, l'information I_NOx relative à la mesure du taux d'oxydes d'azote dans les gaz d'échappement est sélectionnée. En effet, l'excès d'ammoniac libéré sur route ou autoroute n'est pas détectable par un nez humain car il est rapidement dilué par la vitesse du véhicule et l'espace. Il n'est donc pas nécessaire d'effectuer une mesure du taux d'ammoniac lorsque le véhicule se trouve sur ce type de réseaux.

Les conditions liées à la vitesse V_veh et au positionnement Pos_veh du véhicule peuvent être combinées entre elles via une porte logique de type ET ou une porte logique de type OU référencée 17.

Ces trois conditions principales (gradient de couple, température en amont du système SCR et type de roulage) sont combinées entre elles par une porte logique de type OU référencée 18 en sortie de laquelle une temporisation Temp pourra être appliquée via le module 19 à l'activation de la mesure du taux d'ammoniac. Il est possible d'ajouter à chaque condition une calibration d'activation ou non afin de disposer d'une flexibilité supplémentaire dans la loi de commande.

Ces trois conditions principales pourraient également être conditionnées dans une table de vérité qui permettrait d'activer ou non telle ou telle condition.

## Revendications

1. Procédé de supervision d'une sonde de mesure combinée (11) pour un système de dépollution de gaz d'échappement émis par un moteur thermique (2) équipant un véhicule automobile comportant:
- un système (6) de réduction d'oxydes d'azote contenus dans les gaz d'échappement par réaction entre de l'ammoniac et lesdits oxydes d'azote, et
- un catalyseur (10) de réduction d'un excès d'ammoniac contenu dans les gaz d'échappement,
ledit procédé comportant une étape de basculement sélectif entre une première information (I_NOx) issue de la sonde (11) relative à une mesure d'oxydes d'azote, telle que le taux d'oxydes d'azote, contenus dans les gaz d'échappement et une seconde information (I_NH₃) issue de la sonde (11) relative à une mesure d'ammoniac, telle que le taux d'ammoniac, contenu dans les gaz d'échappement, en fonction de conditions de fonctionnement du moteur thermique (2) et/ou du véhicule automobile,
le basculement sélectif est effectué en fonction d'un gradient de couple (Grad_C) permettant d'anticiper une phase de fonctionnement transitoire du moteur thermique (2).

2. Procédé selon la revendication 1, **caractérisé en ce que**, lorsque le gradient de couple (Grad_C) est inférieur à un seuil (K), l'information (I_NOx) relative à la mesure d'oxydes d'azote dans les gaz d'échappement est sélectionnée, et lorsque le gradient de couple (Grad_C) dépasse le seuil (K), l'information (I_NO₃) relative à la mesure d'ammoniac dans les gaz d'échappement est sélectionnée.

3. Procédé selon la revendication 2, **caractérisé en ce que** le seuil (K) de gradient de couple est défini par une cartographie calibrable en fonction d'un régime moteur (R_mot) et d'un gradient de couple (Grad_C).

4. Procédé selon la revendication 2 ou 3, **caractérisé en ce que** lorsque le gradient de couple (Grad_C) devient inférieur au seuil (K), une temporisation calibrable (Temp) est appliquée sur l'information (I_NH₃) relative à la mesure d'ammoniac de manière à capter l'intégralité d'un pic d'ammoniac dû à un régime de fonctionnement transitoire.

5. Procédé selon l'une quelconque des revendications 1 à 4, **caractérisé en ce que** le basculement sélectif est effectué en fonction d'une température (T_am_SCR) en amont du système (6) de réduction des oxydes d'azote.

6. Procédé selon la revendication 5, **caractérisé en ce que**, dans le cas où la température (T_am_SCR) est inférieure à un seuil minimal d'efficacité (T_min_eff) du système (6) de réduction d'oxydes d'azote autorisant une injection d'agent réducteur, l'information (I_NO₃) relative à la mesure d'ammoniac est sélectionnée.

7. Procédé selon la revendication 6, **caractérisé en ce que** le basculement sélectif est effectué en fonction d'une vitesse (V_veh) du véhicule automobile et/ou de coordonnées de position (Pos_veh) dudit véhicule automobile.

8. Procédé selon la revendication 7, **caractérisé en ce que**:
- dans le cas où la vitesse (V_veh) du véhicule automobile est supérieure à un seuil de vitesse calibrable (V_cal) et/ou que les coordonnées de position (Pos_veh) du véhicule automobile correspondent à un roulage du véhicule sur route ou autoroute, l'information (I_NOx) relative à la mesure d'oxydes d'azote dans les gaz d'échappement est sélectionnée,
- dans le cas où la vitesse (V_veh) du véhicule automobile est inférieure au seuil de vitesse calibrable (V_cal) et/ou que les coordonnées de position (Pos_veh) du véhicule automobile correspondent à un roulage du véhicule en ville, l'information (I_NO₃) relative à la mesure d'ammoniac dans les gaz d'échappement est sélectionnée.

9. Procédé selon l'une quelconque des revendications 1 à 8, **caractérisé en ce que** l'information (I_NOx) relative à la mesure d'oxydes d'azote est sélectionnée par défaut.

## Patentansprüche

1. Überwachungsverfahren einer kombinierten Messesonde (11) für ein Reinigungssystem von Abgasen, die von einer Brennkraftmaschine (2), die ein Kraftfahrzeug ausstattet, abgegeben werden, das Folgendes umfasst:
- ein System (6) zur Reduktion von Stickstoffoxiden, die in den Abgasen enthalten sind, durch Reaktion zwischen dem Ammoniak und den Stickstoffoxiden, und
- einen Katalysator (10) zur Reduktion eines Überschusses an Ammoniak, der in den Abgasen enthalten ist,
wobei das Verfahren einen Schritt des selektiven Übergehens zwischen einer ersten Information (I_NOₓ), die aus der Sonde (11) stammt, in Zusammenhang mit einer Stickstoffoxidmessung, wie des Stickstoffoxidgehalts, der in den Abgasen enthalten ist, und einer zweiten Information (I_NH₃), die aus der Sonde (11) stammt, in Zusammenhang mit einer Ammoniakmessung, wie des Ammoniakgehalts, der in den Abgasen enthalten ist, in Abhängigkeit von Betriebsbedingungen der Brennkraftmaschine (2) und/oder des Kraftfahrzeugs,
wobei das selektive Übergehen in Abhängigkeit von einem Drehmomentgradienten (Grad_C) erfolgt, der es erlaubt, eine Übergangsbetriebsphase der Brennkraftmaschine (2) vorwegzunehmen.

2. Verfahren nach Anspruch 1, **dadurch gekennzeichnet, dass**, wenn der Drehmomentgradient (Grad_C) kleiner ist als ein Schwellenwert (K), die Information (I_NOₓ) in Zusammenhang mit der Stickstoffoxidmessung in den Abgasen ausgewählt wird, und, wenn der Drehmomentgradient (Grad_C) den Schwellenwert (K) überschreitet, die Information (I_NO₃) in Zusammenhang mit der Ammoniakmessung in den Abgasen ausgewählt wird.

3. Verfahren nach Anspruch 2, **dadurch gekennzeichnet, dass** der Drehmomentgradient-Schwellenwert (K) von einer kalibrierbaren Kartographie in Abhängigkeit von einer Motordrehzahl (R_mot) und einem Drehmomentgradienten (Grad_C) definiert wird.

4. Verfahren nach Anspruch 2 oder 3, **dadurch gekennzeichnet, dass**, wenn der Drehmomentgradient (Grad_C) kleiner wird als der Schwellenwert (K), eine kalibrierbare Verzögerung (Temp) auf die Information (I_NH₃) in Zusammenhang mit der Ammoniakmessung derart angewandt wird, dass eine Ammoniakspitze, die auf eine Übergangsbetriebsdrehzahl zurückzuführen ist, vollständig erfasst wird.

5. Verfahren nach einem der Ansprüche 1 bis 4, **dadurch gekennzeichnet, dass** der selektive Übergang in Abhängigkeit von einer Temperatur (T_am_SCR) stromaufwärts des Stickstoffoxidreduktionssystems (6) erfolgt.

6. Verfahren nach Anspruch 5, **dadurch gekennzeichnet, dass** in dem Fall, dass die Temperatur (T_am_SCR) kleiner ist als ein Mindesteffizienzschwellenwert (T_min_eff) des Stickstoffoxidreduktionssystems (6), der eine Reduktionsmitteleinspritzung gestattet, die Information (I_NO₃) in Zusammenhang mit der Ammoniakmessung ausgewählt wird.

7. Verfahren nach Anspruch 6, **dadurch gekennzeichnet, dass** das selektive Übergehen in Abhängigkeit von einer Geschwindigkeit (V_veh) des Kraftfahrzeugs und/oder von Positionskoordinaten (Pos_veh) des Kraftfahrzeugs erfolgt.

8. Verfahren nach Anspruch 7, **dadurch gekennzeichnet, dass**:
- in dem Fall, dass die Geschwindigkeit (V_veh) des Kraftfahrzeugs größer ist als ein kalibrierbarer Geschwindigkeitsschwellenwert (V_cal), und/oder dass die Positionskoordinaten (Pos_veh) des Kraftfahrzeugs einem Fahren des Fahrzeugs auf einer Straße oder Autobahn entsprechen, die Information (I_NOₓ) in Zusammenhang mit der Stickstoffoxidmessung in den Abgasen ausgewählt wird,
- in dem Fall, dass die Geschwindigkeit (V_veh) des Kraftfahrzeugs kleiner ist als der kalibrierbare Schwellenwert (V_cal), und/oder die Positionskoordinaten (Pos_veh) des Kraftfahrzeugs einem Fahren des Fahrzeugs in der Stadt entsprechen, die Information (I_NO₃) in Zusammenhang mit der Ammoniakmessung in den Abgasen ausgewählt wird.

9. Verfahren nach einem der Ansprüche 1 bis 8, **dadurch gekennzeichnet, dass** die Information (I_NOₓ) in Zusammenhang mit der Stickstoffoxidmessung standardgemäß ausgewählt wird.

## Claims

1. A method for monitoring a combined measuring probe (11) for a pollution removal system of exhaust gas emitted by a heat engine (2) equipping a motor vehicle comprising:
- a system (6) for reducing nitrogen oxides contained in the exhaust gases by reaction between ammonia and said nitrogen oxides, and
- a catalyst (10) for reducing an excess of ammonia contained in the exhaust gases,
said method comprising a step of selective switching between a first item of information (I_NOₓ) issued from the probe (11) relating to a measurement of nitrogen oxides, such as the level of nitrogen oxides, contained in the exhaust gases and a second item of information (I_NH₃) issued from the probe (11) relating to a measurement of ammonia, such as the level of ammonia, contained in the exhaust gases, as a function of operating conditions of the heat engine (2) and/or of the motor vehicle, the selective switching is carried out as a function of a torque gradient (Grad_C) permitting the anticipation of a transitory operating phase of the heat engine (2).

2. The method according to Claim 1, **characterized in that**, when the torque gradient (Grad_C)_ is less than a threshold (K), the information (I_NOₓ) relating to the measurement of nitrogen oxides in the exhaust gases is selected, and when the torque gradient (Grad_C) exceeds the threshold (K), the information (I_NO₃) relating to the measurement of ammonia in the exhaust gases is selected.

3. The method according to Claim 2, **characterized in that** the torque gradient threshold (K) is defined by a calibratable cartography as a function of an engine speed (R_mot) and of a torque gradient (Grad_C).

4. The method according to Claim 2 or 3, **characterized in that** when the torque gradient (Grad_C) becomes less than the threshold (K), a calibratable delay (Temp) is applied on the information (I_NH₃) relating to the measurement of ammonia so as to capture the whole of an ammonia peak due to a transitory operating speed.

5. The method according to any one of Claims 1 to 4, **characterized in that** the selective switching is carried out as a function of a temperature (T_am_SCR) upstream of the system (6) for reducing nitrogen oxides.

6. The method according to Claim 5, **characterized in that**, in the case where the temperature (T_am_SCR) is less than a minimum efficiency threshold (T_min_eff) of the system (6) for reducing nitrogen oxides permitting an injection of reducing agent, the information (I_NO₃) relating to the measurement of ammonia is selected.

7. The method according to Claim 6, **characterized in that** the selective switching is carried out as a function of a speed (V_veh) of the motor vehicle and or of position coordinates (Pos_veh) of said motor vehicle.

8. The method according to Claim 7, **characterized in that**:
- in the case where the speed (V_veh) of the motor vehicle is greater than a calibratable speed threshold (V_cal) and/or the position coordinates (Pos_veh) of the motor vehicle correspond to a travelling of the vehicle on a highway or motorway, the information (I_NOₓ) relating to the measurement of nitrogen oxides in the exhaust gases is selected,
- in the case where the speed (V_veh) of the motor vehicle is less than the calibratable speed threshold (V_cal) and/or the position coordinates (Pos_veh) of the motor vehicle correspond to a travelling of the vehicle in town, the information (I_NO₃) relating to the measurement of ammonia in the exhaust gases is selected.

9. The method according to any one of Claims 1 to 8, **characterized in that** the information (I_NOₓ) relating to the measurement of nitrogen oxides is selected by default.
